(19) **Europäisches Patentamt European Patent Office Office européen des brevets**

(11) **EP 3 011 068 B1**

(12) **FASCICULE DE BREVET EUROPEEN**

(45) Date de publication et mention
de la délivrance du brevet:
**31.05.2017 Bulletin 2017/22**

(21) Numéro de dépôt: **14750519.2**

(22) Date de dépôt: **18.06.2014**

(51) Int Cl.:
*C22C 21/12* ^(2006.01)     *C22F 1/057* ^(2006.01)

(86) Numéro de dépôt international:
**PCT/FR2014/000138**

(87) Numéro de publication internationale:
**WO 2015/011346 (29.01.2015 Gazette 2015/04)**

(54) **ELÉMENT DE STRUCTURE EXTRADOS EN ALLIAGE ALUMINIUM CUIVRE LITHIUM**

BOGENRÜCKENSTRUKTURELEMENT AUS EINER ALUMINIUM-KUPFER-LITHIUM-LEGIERUNG

EXTRADOS STRUCTURAL ELEMENT MADE FROM AN ALUMINIUM COPPER LITHIUM ALLOY

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.06.2013 FR 1301459**

(43) Date de publication de la demande:
**27.04.2016 Bulletin 2016/17**

(73) Titulaire: **Constellium Issoire
63500 Issoire (FR)**

(72) Inventeurs:
• **DANIELOU Armelle
F- 73360 Les Echelles (FR)**
• **POUGET Gaëlle
F-38000 Grenoble (US)**
• **SIGLI Christophe
F-38000 Grenoble (FR)**

(74) Mandataire: **Constellium - Propriété Industrielle
C-TEC Constellium Technology Center
Propriété Industrielle
Parc Economique Centr'Alp
725, rue Aristide Bergès
CS10027
38341 Voreppe (FR)**

(56) Documents cités:
**US-A- 5 389 165       US-A- 5 455 003
US-A1- 2012 152 415**

**Description**

**Domaine de l'invention**

L'invention concerne les produits en alliages aluminium-cuivre-lithium, plus particulièrement, de tels produits, leurs procédés de fabrication et d'utilisation, destinés en particulier à la construction aéronautique et aérospatiale.

**Etat de la technique**

Des produits en alliage d'aluminium sont développés pour produire des pièces de haute résistance destinées notamment à l'industrie aéronautique et à l'industrie aérospatiale.

Les alliages d'aluminium contenant du lithium sont très intéressants à cet égard, car le lithium peut réduire la densité de l'aluminium de 3 % et augmenter le module d'élasticité de 6 % pour chaque pourcent en poids de lithium ajouté. Pour que ces alliages soient sélectionnés dans les avions, leur performance par rapport aux autres propriétés d'usage doit atteindre celle des alliages couramment utilisés, en particulier en terme de compromis entre les propriétés de résistance mécanique statique (limite d'élasticité en traction et en compression, résistance à la rupture) et les propriétés de tolérance aux dommages (ténacité, résistance à la propagation des fissures en fatigue), ces propriétés étant en général antinomiques. Pour certaines pièces telles que les extrados de voilure la limite d'élasticité en compression est une propriété essentielle car elle est déterminante pour les caractéristiques de flambement. Pour certaines pièces, cette caractéristique est essentielle pour le dimensionnement et donc le poids des pièces.

Ces alliages doivent également présenter une résistance à la corrosion suffisante, pouvoir être mis en forme selon les procédés habituels et présenter de faibles contraintes résiduelles de façon à pouvoir être usinés de façon intégrale.

Le brevet US 5,032,359 décrit une vaste famille d'alliages aluminium-cuivre-lithium dans lesquels l'addition de magnésium et d'argent, en particulier entre 0,3 et 0,5 pourcent en poids, permet d'augmenter la résistance mécanique.

Le brevet US 5,455,003 décrit un procédé de fabrication d'alliages Al-Cu-Li qui présentent une résistance mécanique et une ténacité améliorés à température cryogénique, en particulier grâce à un écrouissage et un revenu appropriés. Ce brevet recommande en particulier la composition, en pourcentage en poids, Cu = 3,0 - 4,5, Li = 0,7 - 1,1, Ag = 0 - 0,6, Mg = 0,3-0,6 et Zn = 0 - 0,75.

Le brevet US 7,438,772 décrit des alliages comprenant, en pourcentage en poids, Cu : 3-5, Mg : 0,5-2, Li : 0,01-0,9 et décourage l'utilisation de teneur en lithium plus élevées en raison d'une dégradation du compromis entre ténacité et résistance mécanique.

Le brevet US 7,229,509 décrit un alliage comprenant (% en poids) : (2,5-5,5) Cu, (0,1-2,5) Li, (0,2-1,0) Mg, (0,2-0,8) Ag, (0,2-0,8) Mn, 0,4 max Zr ou d'autres agents affinant le grain tels que Cr, Ti, Hf, Sc, V.

La demande de brevet US 2009/142222 A1 décrit des alliages comprenant (en % en poids), 3,4 à 4,2% de Cu, 0,9 à 1,4 % de Li, 0,3 à 0,7 % de Ag, 0,1 à 0,6% de Mg, 0,2 à 0,8 % de Zn, 0,1 à 0,6 % de Mn et 0,01 à 0,6 % d'au moins un élément pour le contrôle de la structure granulaire. Cette demande décrit également un procédé de fabrication de produits filés.

La demande de brevet WO2009/036953 concerne un produit en alliage d'aluminium pour les éléments structuraux présentant une composition chimique comprenant, en poids %: Cu de 3,4 à 5,0, Li de 0,9 à 1,7, Mg de 0,2 à 0,8, Ag d'environ 0,1 à 0,8, Mn de 0,1 à 0,9, Zn jusqu'à 1,5, et un ou plusieurs éléments choisis dans le groupe constitué par: (Zr environ 0,05 à 0,3, Cr 0,05 à 0,3, Ti environ 0,03 à 0,3, Sc environ 0,05 à 0,4, Hf environ 0,05 à 0,4), Fe <0,15, Si <0,5, les impuretés normales et inévitables.

La demande de brevet WO 2012/085359 A2 concerne un procédé de fabrication de produits laminés en alliage à base d'aluminium comprenant 4,2 à 4,6 % en poids de Cu, 0,8 à 1,30 % en poids de Li, 0,3 à 0,8 % en poids de Mg, 0,05 à 0, 18 % en poids de Zr, 0,05 à 0,4 % en poids d'Ag, 0,0 à 0,5% en poids de Mn, au plus 0,20 % en poids de Fe + Si, moins de 0,20 % en poids de Zn, au moins un élément choisi parmi Cr, Se, Hf et Ti, la quantité dudit élément, s'il est choisi, étant de 0,05 à 0,3 % en poids pour Cr et pour Se, 0,05 à 0,5 % en poids pour Hf et de 0,01 à 0, 15 % en poids pour Ti, les autres éléments au plus 0,05% en poids chacun et 0, 15% en poids au total, le reste aluminium, comprenant les étapes d'élaboration, coulée, homogénéisation, laminage avec une température supérieure à 400 °C, mise en solution, trempe, traction entre 2 et 3,5% et revenu.

La demande de brevet US2012/0225271 A1 concerne des produits corroyés d'épaisseur au moins 12,7 mm contenant de 3,00 à 3,80 3,00 à 3,80 en poids.% de Cu, de 0,05 à 0,35 en poids % de Mg, de 0,975 à 1,385 en poids % de Li, dans lequel -0,3 *Mg - 0.15Cu +1,65 ≤ Li ≤ -0,3 * Mg-0.15Cu +1,85, de 0,05 à 0,50 en poids. % d'au moins un élément de contrôle de la structure du grain, dans lequel l'élément de contrôle de la structure des grains est choisi dans le groupe constitué de Zr, Sc, Cr, V, Hf, d'autres éléments des terres rares, et des combinaisons de ceux-ci, jusqu'à 1,0 en poids % de Zn, jusqu'à 1,0 en poids % de Mn, jusqu'à 0,12 en poids % de Si, jusqu'à 0,15 en poids % de Fe, jusqu'à 0,15 en poids % de Ti, jusqu'à 0,10 poids. % d'autres éléments avec un total ne dépassant pas 0,35 en poids %. L'article « The effect of composition on the Weldability of Al-Cu-Li-Ag-Mg Alloys in the High Cu :Li Regime » de L.S Kramer, C.E. Cross et J.R. Pickens, Sixth International Aluminium-Lithium Conférence; Garmisch-Partenkirchen; Allemagne; 7-11 Oct. 1991, décrit des alliages contenant (en % en poids) de 5 à 6,3 %¨de Cu, de 1 à 1,9 % de Li, de 0 à 0,4 % de Mg, de 0 à 0,4 % de Ag et de 0 à 0,1 % de Ti.

Il existe un besoin pour des produits corroyés en alliage aluminium-cuivre-lithium présentant des propriétés améliorées par rapport à celles des produits connus, en particulier en termes de compromis entre les propriétés de résistance mécanique statique et en particulier ayant une limite d'élasticité en compression très élevée et les propriétés de tolérance aux dommages, en particulier la ténacité, de stabilité thermique, de résistance à la corrosion et d'aptitude à l'usinage suffisantes, tout en ayant une faible densité.

De plus il existe un besoin pour un procédé de fabrication de ces produits fiable et économique.

**Objet de l'invention**

Un premier objet de l'invention est un procédé de fabrication d'un produit filé, laminé et/ou forgé à base d'alliage d'aluminium dans lequel :

a) on élabore un bain de métal liquide comprenant

4,2 à 5,2 % en poids de Cu,
0,9 à 1,2 % en poids de Li,
0,1 à 0,3 % en poids de Ag,
0,1 à 0,25 % en poids de Mg,
0,08 à 0,18 % en poids de Zr,
0,01 à 0,15 % en poids de Ti,
optionnellement jusque 0,2 % en poids de Zn,
optionnellement jusque 0,6 % en poids de Mn,

une teneur de Fe et de Si inférieure ou égale à 0,1 % en poids chacun, et des autres éléments à une teneur inférieure ou égale à 0,05% en poids chacun et 0,15% en poids au total, reste aluminium,

b) on coule une forme brute à partir dudit bain de métal liquide ;

c) on homogénéise ladite forme brute par un traitement thermique dans lequel la température à mi-épaisseur de la forme brute atteint au minimum de 510 °C pendant une durée d'au moins 10 heures,

d) on déforme à chaud et optionnellement à froid ladite forme brute ainsi homogénéisée en un produit filé, laminé et/ou forgé ;

e) on met en solution à une température d'au moins 515 °C et on trempe ledit produit ;

f) on tractionne de façon contrôlée ledit produit avec une déformation permanente de 0,5 à 5 %;

g) on réalise un revenu dudit produit par chauffage à une température de 140 à 170 °C pendant 5 à 70 heures.

Un autre objet de l'invention est un produit filé, laminé et/ou forgé en alliage d'aluminium susceptible d'être obtenu par le procédé selon l'invention présentant une épaisseur d'au moins 12 mm, une limite d'élasticité en compression dans la direction longitudinale d'au moins 645 MPa et un allongement dans la direction longitudinale d'au moins 7%.

Encore un autre objet de l'invention est un élément de structure extrados incorporant au moins un produit selon l'invention ou fabriqué à partir d'un tel produit

**Description des figures**

Figure 1 : Compromis de propriétés entre la limite d'élasticité en compression et la ténacité pour les tôles de l'exemple 1.

Figure 2 : Schéma des éprouvettes utilisées pour les essais en fatigue à trou. Les dimensions sont données en mm.

Figure 3 : Courbes de Wöhler obtenues avec les alliages 2, 4 et 5 dans la direction L-T.

**Description de l'invention**

Sauf mention contraire, toutes les indications concernant la composition chimique des alliages sont exprimées comme un pourcentage en poids basé sur le poids total de l'alliage. L'expression 1,4 Cu signifie que la teneur en cuivre exprimée en % en poids est multipliée par 1,4. La désignation des alliages se fait en conformité avec les règlements de The Aluminium Association, connus de l'homme du métier. La densité dépend de la composition et est déterminée par calcul plutôt que par une méthode de mesure de poids. Les valeurs sont calculées en conformité avec la procédure de The Aluminium Association, qui est décrite pages 2-12 et 2-13 de « Aluminum Standards and Data ». Les définitions des états métallurgiques sont indiquées dans la norme européenne EN 515.

Les caractéristiques mécaniques statiques en traction, en d'autres termes la résistance à la rupture $R_m$, la limite d'élasticité conventionnelle à 0,2% d'allongement $R_{p0,2}$, et l'allongement à la rupture A%, sont déterminés par un essai de traction selon la norme NF EN ISO 6892-1, le prélèvement et le sens de l'essai étant définis par la norme EN 485-1. La limite d'élasticité en compression a été mesurée à 0,2% de compression selon la norme ASTM E9.

Le facteur d'intensité de contrainte ($K_Q$) est déterminé selon la norme ASTM E 399. La norme ASTM E 399 donne les critères qui permettent de déterminer si $K_Q$ est une valeur valide de $K_{1C}$. Pour une géométrie d'éprouvette donnée, les valeurs de $K_Q$ obtenues pour différents matériaux sont comparables entre elles pour autant que les limites d'élasticité des matériaux soient du même ordre de grandeur.

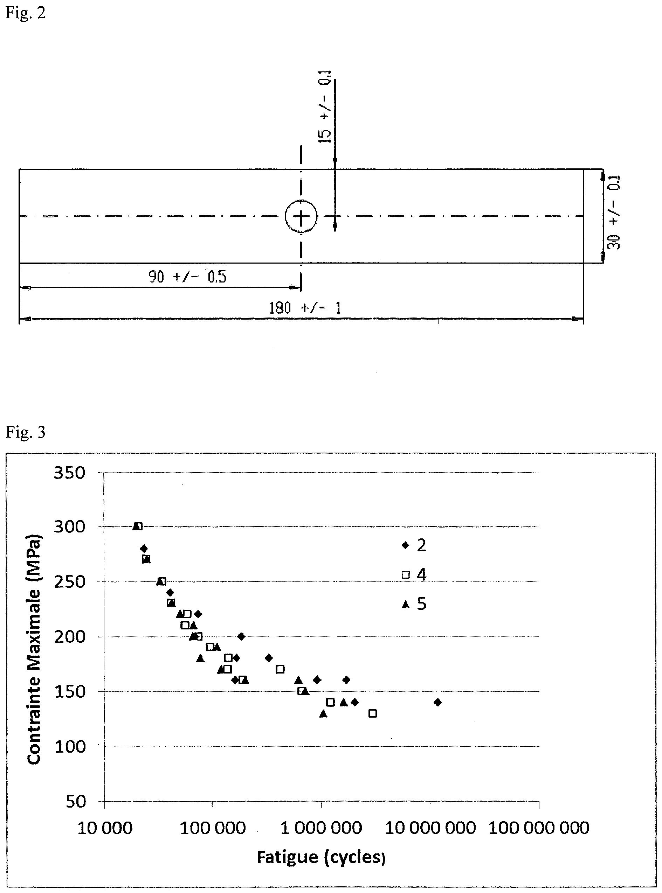

Les propriétés en fatigue sur éprouvettes à trou sont mesurées à l'air ambiant pour des niveaux de contrainte variables, à une fréquence de 50 Hz, un rapport de contrainte R = 0,1, sur des éprouvettes telles que représentées sur la Figure 2, $K_t$ = 2,3, prélevées au centre et à mi-épaisseur des tôles dans la direction L-T. L'équation de Walker a été utilisée pour déterminer une valeur de contrainte maximale représentative de 50 % de non rupture à 100 000 cycles. Pour ce faire un indice de qualité fatigue (IQF) est calculé pour chaque point de la courbe de Wöhler avec la formule

$$ IQF = \sigma_{max} \left( \frac{N_0}{N} \right)^{1/n} $$

où $\sigma_{max}$ est la contrainte maximale appliquée à un échantillon donné, N est le nombre de cycles jusqu'à la rupture, $N_0$ est égale à 100 000 et n = -4,5. On rapporte l'IQF correspondant à la médiane, soit 50% rupture pour 100 000 cycles. Dans le cadre de l'invention les caractéristiques mécaniques statiques en traction, la limite d'élasticité en compression et le facteur d'intensité de contrainte sont mesuré à mi-épaisseur des produits.

Sauf mention contraire, les définitions de la norme EN 12258 s'appliquent.

Selon la présente invention, il est possible d'améliorer la limite d'élasticité en compression d'alliages aluminium cuivre lithium magnésium dont la teneur en cuivre est comprise entre 4,2 et 5,2 % en poids et la teneur en lithium entre 0,9 et 1,2 % en poids en diminuant la teneur en magnésium, par rapport aux teneurs d'au moins 0,3 % en poids connues et en augmentant simultanément la température de mise en solution. De manière surprenante, la diminution de la teneur en magnésium, dont la conséquence attendue est une diminution des propriétés mécaniques statiques, permet pour les alliages de l'invention au contraire d'augmenter les propriétés mécaniques statiques.

L'alliage selon l'invention contient 4,2 à 5,2 % en poids de Cu. Une teneur minimale en cuivre de 4,3% et de préférence de 4,4 % en poids est avantageuse de façon à obtenir des propriétés mécaniques statiques élevées. Une teneur maximale en cuivre de 5,0% et de préférence de 4,8 % en poids est avantageuse de façon à obtenir un allongement et une ténacité suffisantes.

L'alliage selon l'invention contient 0,9 à 1,2 % en poids de Li. Une teneur minimale en lithium de 1,0 % et de préférence de 1,03 % en poids est avantageuse de façon à obtenir des propriétés mécaniques statiques élevées. Une teneur maximale en lithium de 1,15% et de préférence de 1,10% en poids est avantageuse de façon à obtenir un allongement et une ténacité suffisantes.

L'alliage selon l'invention contient 0,1 à 0,25 % en poids de Mg. Une teneur minimale en magnésium de 0,15 % et de préférence de 0,20 % en poids est avantageuse de façon à obtenir des propriétés mécaniques statiques élevées. Une teneur maximale en magnésium de 0,24% en poids est avantageuse de façon à encore augmenter la température de mise en solution. Selon les présents inventeurs, il est possible que la teneur en magnésium selon l'invention ait pour conséquence une augmentation de la température de solidus et permette donc d'augmenter la température de mise en solution et ainsi améliorer la mise en solution du cuivre et la fraction de phases durcissantes après revenu. Les limites d'élasticité en traction et en compression très élevées, parfois supérieures à 700 MPa dans le cas des produits extrudés, obtenues avec les alliages selon l'invention tout en maintenant une aptitude à la mise en forme, l'allongement restant d'au moins 7%, sont probablement liées notamment à l'excellente mise en solution du cuivre.

L'alliage selon l'invention contient 0,1 à 0,3 % en poids d'Ag. Une teneur minimale en argent de 0,15 % et de préférence de 0,20 % en poids est avantageuse. Une teneur maximale en argent de 0,25% en poids est avantageuse. Les présents inventeurs pensent que contrairement à ce qui est attendu, la relativement faible teneur en argent permet d'augmenter encore la résistance mécanique statique en contribuant à autoriser l'augmentation de la température de mise en solution.

L'alliage selon l'invention contient 0,08 à 0,18 % en poids de Zr. De préférence, l'alliage selon l'invention contient 0,11 à 0,18 % en poids de Zr. Une teneur minimale en zirconium de 0,13 % en poids est avantageuse. Une teneur maximale en zirconium de 0,17% en poids est avantageuse. L'alliage selon l'invention contient 0,01 à 0,15 % en poids de Ti. Une teneur minimale en titane de 0,02 % en poids est avantageuse. Une teneur maximale en titane de 0,1% en poids et de préférence de 0,05% en poids est avantageuse.

L'addition de zirconium et de titane contribue à obtenir une structure essentiellement non recristallisée qui est avantageuse. L'addition de titane contribue par ailleurs à contrôler la structure granulaire lors de la coulée.

Optionnellement, l'alliage selon l'invention peut contenir jusqu'à 0,2 % en poids de zinc. Dans un mode de réalisation de l'invention la teneur en zinc est inférieure à 0,05 % en poids.

Optionnellement, l'alliage selon l'invention peut contenir jusqu'à 0,6 % en poids de manganèse. Dans un mode de réalisation avantageux la teneur en manganèse est comprise entre 0,2 et 0,5 % en poids et de préférence entre 0,3 ou même 0,35 et 0,45 % en poids. L'addition de manganèse permet dans le cas de la fabrication de tôles d'améliorer simultanément la limite d'élasticité en compression et la ténacité notamment dans la direction L-T ce qui est avantageux. L'addition de manganèse permet également dans le cas de la fabrication de profilés par extrusion d'améliorer notamment la ténacité dans la direction T-L. Dans un autre mode de réalisation, il peut être avantageux pour la fabrication de certains profilés par extrusion que la teneur en manganèse soit inférieure à 0,05 % en poids.

La teneur de Fe et de Si de l'alliage selon l'invention est inférieure ou égale à 0,1 % en poids chacun, avantageusement la teneur en fer est inférieure à 0,06 % en poids et la teneur en silicium est inférieure à 0,04 % en poids. Les autres éléments ont une teneur inférieure ou égale à 0,05 % en poids chacun et 0,15 % en poids au total, le reste est de l'aluminium. Dans le procédé de fabrication selon l'invention, on élabore un bain de métal liquide de composition selon l'invention puis on coule une forme brute, telle qu'une plaque de laminage, une billette de filage ou une ébauche de forge, à partir dudit bain de métal liquide. Le procédé selon l'invention peut comprendre des étapes connues de l'homme du métier telles que le scalpage ou des traitements thermiques de détente des plaques coulées. La forme brute est homogénéisée par un traitement thermique dans lequel la température à mi-épaisseur de la forme brute atteint au minimum 510 °C pendant une durée d'au moins 10 heures. L'alliage selon l'invention, notamment en raison de la faible teneur en magnésium et en argent, permet d'homogénéiser à une température élevée sans provoquer de fusion locale partielle, aussi appelée brûlure. Avantageusement la température à mi-épaisseur de la forme brute atteint au minimum 515 °C pendant une durée d'au moins 10 heures. Préférentiellement, l'homogénéisation est réalisée avec au moins deux paliers, typiquement au moins un premier palier à une température comprise entre 495 °C et 505 °C pendant une durée d'au moins 10 heures et au moins un second palier à une température d'au moins 515 °C pendant une durée d'au moins 10 heures ou en utilisant une vitesse de montée lente, typiquement inférieure à 10 °C/heure et préférentiellement inférieure 6 °C/heure à partir de 490 °C.

Après homogénéisation, ladite forme brute est déformée à chaud et optionnellement à froid en un produit filé, laminé et/ou forgé. La température de déformation à chaud est typiquement au moins de 350 °C et de préférence au moins 400 °C. Ledit produit est ensuite mis en solution à une température d'au moins 515 °C, de préférence d'au moins 520 °C et dans certains cas d'au moins 522 °C. La durée de mise en solution est adaptée à l'épaisseur du produit de façon à ce que la température de mise en solution soit atteinte à mi-épaisseur du produit, de préférence pendant une durée d'au moins une heure. Il est possible techniquement de réaliser une mise en solution à une température aussi élevée avec des alliages ayant une composition semblable à celle des alliages selon l'invention en ce qui concerne Cu, Li, Zr, Ti, Zn et Mn mais plus élevée en Mg et Ag mais cela a pour conséquence une dégradation des propriétés mécaniques en raison des brûlures inévitables, notamment l'allongement et la ténacité sont diminués. La valeur maximale de température utilisable pour le traitement de mise en solution peut être évaluée par calorimétrie différentielle (DSC) sur le produit issu de l'étape de déformation à chaud. L'avantage des alliages selon l'invention est d'atteindre une valeur maximale de température utilisable pour le traitement de mise en solution élevée sans risque de brûlure, la vitesse de montée en température étant adaptée à la géométrie du produit par l'homme du métier selon ses connaissances générales. De préférence, la température de mise en solution est inférieure à 530 °C, quand le traitement est réalisé en un seul palier. Les présents inventeurs ont cependant observé qu'avec les alliages selon l'invention, il est possible de réaliser une mise en solution avec un premier palier à une température comprise entre 515 °C et 520 °C et un second palier à une température d'au moins 530°C et de préférence d'au moins 535°C et d'obtenir notamment un compromis amélioré entre allongement et limite d'élasticité.

Après mise en solution, le produit est trempé, typiquement par aspersion ou immersion avec de l'eau à température ambiante. Le produit ainsi mis en solution et trempé subit un détensionnement par traction contrôlée avec une déformation permanente de 0,5 à 5 %. Dans un mode de réalisation favorisant l'amélioration du compromis entre la limite d'élasticité en compression et la ténacité, le détensionnement par traction contrôlée est réalisé avec une déformation permanente inférieure à 2 % et avantageusement de 0,5 à 1,5 %. Ce mode de réalisation avec déformation permanente modérée peut cependant avoir l'inconvénient de nécessiter une durée de revenu élevée et nuire à la productivité du procédé. Dans un autre mode de réalisation favorisant la productivité du procédé, le détensionnement par traction contrôlée est réalisé avec une déformation permanente comprise entre 2% et 4%. Le produit ainsi tractionné subit enfin un revenu par chauffage à une température de 140 à 170 °C pendant 5 à 70 heures. Le revenu peut être effectué en un ou plusieurs paliers. Dans un mode de réalisation dans lequel le détensionnement par traction contrôlée est réalisé avec une déformation permanente inférieure à 2 % le revenu est effectué entre 150 et 160 °C pendant une durée de 40 à 60 heures. Dans un autre mode de réalisation dans lequel le détensionnement par traction contrôlée est réalisé avec une déformation permanente supérieure à 2 % le revenu est effectué entre 150 et 160 °C pendant une durée de 10 à 40 heures.

Les produits ainsi obtenus ont de préférence une structure granulaire essentiellement non-recristallisée. Dans le cadre de la présente invention, on appelle structure granulaire essentiellement non-recristallisée une structure granulaire telle que le taux de recristallisation entre ¼ et ½ épaisseur est inférieur à 30 % et de préférence inférieur à 20%. Les produits selon l'invention ont de préférence une épaisseur d'au moins 12 mm. L'épaisseur des produits filés est définie selon la norme EN 2066:2001 : la section transversale est divisée en rectangles élémentaires de dimensions A et B ; A étant toujours la plus grande dimension du rectangle élémentaire et B pouvant être considéré comme l'épaisseur du rectangle élémentaire. La semelle est le rectangle élémentaire présentant la plus grande dimension A. De préférence, l'épaisseur des produits selon l'invention est au moins 15 mm et inférieure à 50 mm.

Le procédé selon l'invention combinant notamment la composition selon l'invention et les traitements thermiques d'homogénéisation et de mise en solution selon l'invention permet d'obtenir un produit filé, laminé et/ou forgé en alliage d'aluminium présentant une épaisseur d'au moins 12 mm, une limite d'élasticité en compression dans la direction longitudinale d'au moins 645 MPa et de préférence d'au moins 650 MPa et un allongement dans la direction longitudinale d'au moins 7% et de préférence d'au moins 8%.

Les produits filés selon l'invention ont avantageusement une limite d'élasticité en compression dans le sens L d'au moins 680 MPa, une limite d'élasticité en traction dans le sens L est au moins 680 MPa et une ténacité $K_Q$(T - L), d'au moins $17 \ \mathrm{MPa}\sqrt{\mathrm{m}}$. Les produits filés selon l'invention dont la teneur en manganèse est comprise entre 0,2 et 0,5 % en poids ont avantageusement une limite d'élasticité en compression dans le sens L d'au moins 720 MPa, une limite d'élasticité en traction dans le sens L d'au moins 710 MPa et une ténacité $K_Q$(T-L), d'au moins $18 \ \mathrm{MPa}\sqrt{\mathrm{m}}$.

Les produits laminés selon l'invention dont l'épaisseur est d'au moins 20 mm ont avantageusement une limite d'élasticité en compression dans le sens L d'au moins 650 MPa et une ténacité $K_Q$(L-T), d'au moins $18 \ \ \mathrm{MPa}\sqrt{\mathrm{m}}$.

Dans un mode de réalisation avantageux dans lequel la teneur en manganèse est comprise entre 0,2 et 0,5 % en poids les produits laminés selon l'invention dont l'épaisseur est d'au moins 20 mm ont avantageusement une limite d'élasticité en compression dans le sens L d'au moins 653 MPa et préférentiellement d'au moins 655 MPa et une ténacité $K_Q$(L-T), d'au moins $20 \ \ \mathrm{MPa}\sqrt{\mathrm{m}}$. Avantageusement, les produits laminés selon l'invention d'épaisseur au moins 20 mm présentent également des propriétés en fatigue avantageuse pour des éprouvettes à trou, ainsi l'indice de qualité fatigue IQF obtenu sur des éprouvettes à trou Kt = 2,3 selon la Figure 2 à une fréquence de 50 Hz à l'air ambiant avec une valeur R = 0,1 est au moins 200 MPa et de préférence est au moins 210 MPa dans la direction L-T.

Les éléments de structure extrados incorporant au moins un produit selon l'invention ou fabriqué à partir d'un tel produit sont avantageux. On appelle ici « élément de structure » ou « élément structural » d'une construction mécanique une pièce mécanique pour laquelle les propriétés mécaniques statiques et/ou dynamiques sont particulièrement importantes pour la performance de la structure, et pour laquelle un calcul de structure est habituellement prescrit ou réalisé. Il s'agit typiquement d'éléments dont la défaillance est susceptible de mettre en danger la sécurité de ladite construction, de ses utilisateurs, des ses usagers ou d'autrui. Les éléments de structure extrados comprennent la peau de voilure extrados (upper wing skin) et les raidisseurs extrados (upper wing stringers ou stiffeners).

**Exemples**

Exemple 1.

Dans cet exemple, cinq plaques de dimension 406 x 1520 mm dont la composition est donnée dans le tableau 1 ont été coulées. Les alliages 1, 2 et 3 ont une composition selon l'invention. Les alliages 4 et 5 ont une composition de référence.

Tableau 1. Composition en % en poids

| Alliage | Si | Fe | Cu | Mn | Mg | Ti | Zr | Li | Ag | Zn |
|---|---|---|---|---|---|---|---|---|---|---|
| 1 | 0,02 | 0,04 | 4,40 | 0,02 | 0,21 | 0,02 | 0,14 | 1,05 | 0,21 | 0,04 |
| 2 | 0,03 | 0,04 | 4,61 | 0,35 | 0,23 | 0,02 | 0,14 | 1,05 | 0,22 | 0,04 |
| 3 | 0,03 | 0,04 | 4,34 | 0,08 | 0,17 | 0,02 | 0,15 | 1,12 | 0,22 | 0,03 |
| 4 | 0,04 | 0,05 | 4,56 | 0,37 | 0,44 | 0,03 | 0,11 | 1,02 | 0,22 | 0,02 |
| 5 | 0,03 | 0,05 | 4,49 | 0,34 | 0,71 | 0,04 | 0,11 | 1,03 | 0,21 | 0,04 |

Les plaques ont été homogénéisées. Suite à des essais préliminaires par calorimétrie différentielle, des conditions différentes ont été utilisées pour les différentes plaques de façon à atteindre une homogénéisation maximale sans brûlure. Les plaques en alliage 1, 2 et 3 ont été homogénéisées 15 h à 500 °C puis 16 h à 516 °C. Les plaques 4 et 5 ont été homogénéisées 15 h à 492 °C.

Les plaques ont été laminées à chaud à une température supérieure à 420 °C pour obtenir des tôles d'épaisseur 25 mm. Après laminage à chaud des essais de calorimétrie différentielle ont à nouveau été réalisés pour déterminer la température de mise en solution.

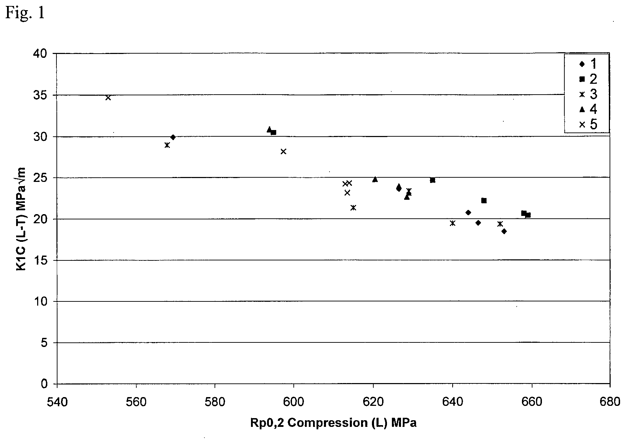

Il a été montré que les tôles selon l'invention pouvaient supporter une température de mise en solution d'au moins 515 °C tandis que pour les tôles de référence un risque de brûlure est présent à cette température et une température de mise en solution de moins de 515 °C a été nécessaire. Les tôles ont été mises en solution à 516 °C (alliages 1 à 3), 512 °C (alliages 4) et 509 °C (alliage 5) pendant environ 5h puis trempées avec de l'eau à 20 °C. Les tôles en alliage 1 et 2 ont ensuite été tractionnées d'environ 3%. Les tôles en alliage 4 et 5 ont été tractionnées de 4%. Les propriétés mécaniques statiques mesurées à mi-épaisseur obtenues après différentes conditions de revenu à 155 °C sont données dans le Tableau 2 et représentées sur la figure 1. Les éprouvettes utilisées pour la mesure de ténacité avaient une largeur W = 40 mm et une épaisseur B = 20 mm.

Tableau 2, Propriétés mécaniques mesurées à mi-épaisseur

| | Durée de revenu à 155 °C | Propriétés en traction sens L | | | Propriétés en compression sens L | Ténacité |
|---|---|---|---|---|---|---|
| | | Rm MPa | Rp$_{0,2}$ MPa | A (%) | Rc$_{0,2}$ MPa | K$_Q$ L-T (* : K$_{1C}$) (MPa$\sqrt{m}$) |
| 1 | 0 | 432 | 308 | 14,0 | 271 | 36,1 |
| | 10 | 621 | 567 | 11,3 | 570 | 29,9* |
| | 15 | 650 | 611 | 8,4 | 627 | 23,6* |
| | 20 | 660 | 625 | 7,6 | 644 | 20,8* |
| | 30 | 663 | 632 | 7,5 | 647 | 19,5* |
| | 50 | 670 | 640 | 6,9 | 653 | 18,5* |
| 2 | 0 | 454 | 321 | 12,2 | 285 | 37,8 |
| | 10 | 629 | 581 | 8,9 | 595 | 30,5* |
| | 15 | 652 | 612 | 8,2 | 635 | 24,7* |
| | 20 | 657 | 621 | 7,3 | 648 | 22,2* |
| | 30 | 667 | 635 | 7,2 | 659 | 20,4* |
| | 50 | 668 | 637 | 6,4 | 658 | 20,7* |
| 3 | 0 | 409 | 292 | 14,9 | 263 | 33,8 |
| | 10 | 614 | 559 | 10,9 | 568 | 29,0* |
| | 15 | 640 | 599 | 8,1 | 629 | 23,4* |
| | 20 | 654 | 618 | 8,3 | 615 | 21,4* |
| | 30 | 662 | 630 | 8,3 | 640 | 19,5* |
| | 50 | 665 | 634 | 7,2 | 652 | 19,4* |
| 4 | 0 | 475 | 364 | 14,7 | 325 | 33,4 |
| | 10 | 617 | 587 | 9,8 | 594 | 30,8* |
| | 20 | 638 | 614 | 8,8 | 621 | 24,8* |
| | 30 | 642 | 621 | 7,7 | 627 | 23,9* |
| | 45 | 643 | 624 | 7,4 | 629 | 23,1* |
| | 60 | 643 | 624 | 7,8 | 629 | 22,7* |
| | 0 | 484 | 385 | 12,2 | 353 | 35,5 |

(suite)

| | Durée de revenu à 155 °C | Propriétés en traction sens L | | | Propriétés en compression sens L | Ténacité |
|---|---|---|---|---|---|---|
| | | Rm MPa | $Rp_{0,2}$ MPa | A (%) | $Rc_{0,2}$ MPa | $K_Q$ L-T (* : $K_{1C}$) (MPa√m) |
| 5 | 10 | 590 | 562 | 10,4 | 553 | 34,7 |
| | 20 | 620 | 603 | 8,8 | 598 | 28,2* |
| | 30 | 628 | 613 | 8,7 | 613 | 24,2* |
| | 45 | 631 | 616 | 8,1 | 614 | 24,3* |
| | 60 | 631 | 616 | 7,9 | 614 | 23,2* |

Exemple 2.

Dans cet exemple, on a fait varier les conditions de mise en solution pour une tôle en alliage 2 prélevée après laminage à chaud. Une mise en solution suivie d'une trempe à l'eau a été réalisée dans les conditions de durée et de température indiquées dans le tableau 3. Après trempe, les tôles obtenues ont subi un détensionnement par traction avec un allongement permanent de 3% et un revenu de 25 heures à 155 °C.
Les propriétés mécaniques obtenues en traction dans le sens L à mi-épaisseur sont fournies dans le tableau 3.

Tableau 3. Propriétés mécaniques en traction sens L à mi-épaisseur pour différentes conditions de mise en solution

| Conditions de mise en solution | Rp 0,2 (MPa) | Rm (MPa) | A % |
|---|---|---|---|
| 5h 500°C | 601 | 629 | 9,1 |
| 5h 510°C | 618 | 646 | 9,5 |
| 5h 516°C | 624 | 652 | 8,0 |
| 3h 520°C | 625 | 649 | 8,3 |
| 1h 524°C | 628 | 653 | 7,8 |
| 1h 528°C | 634 | 659 | 7,3 |
| 1h 532°C | 628 | 653 | 5,9 |
| 5h 516°C + 3h 530°C | 626 | 651 | 8,7 |
| 5h 516°C + 3h 540°C | 631 | 656 | 8,2 |

Avec les tôles selon l'invention il est possible d'augmenter significativement la température de mise en solution et de bénéficier d'un potentiel de durcissement accru.

Exemple 3

Dans cet exemple, on a prélevé des billettes de diamètre 139 mm dans des plaques en alliage 1 et 2. Les billettes ont été homogénéisées à 515 °C, filées sous la forme de barres de dimension 54,6 x 16 mm à 460 °C, puis mises en solution 4 heures à 520 °C et trempées à l'eau. Les barres ainsi obtenues ont été tractionnées avec un allongement permanent de 3%, puis elles ont subi un revenu de 15h ou 25h à 155 °C.
Les caractéristiques mécaniques mesurées dans le sens L à mi-épaisseur sont présentées dans le Tableau 4. Les éprouvettes utilisées pour la mesure de ténacité avaient une largeur W = 25 mm et une épaisseur B = 12,5 mm.

Tableau 4 : Propriétés mécaniques obtenues sur les profilés en alliage 1 et 2

| Alliage | Conditions de revenu | Propriétés en traction (L) | | | Propriétés en compression (L) | Ténacité |
|---|---|---|---|---|---|---|
| | | $Rp_{0,2}$ MPa | $R_m$ MPa | A (%) | $Rc_{0,2}$ MPa | K1c T-L (MPa√m) |

(suite)

| Alliage | Conditions de revenu | Propriétés en traction (L) | | | Propriétés en compression (L) | Ténacité |
|---|---|---|---|---|---|---|
| 1 | 15h155°C | 662 | 691 | 10,8 | 682 | 21,3 |
| | 25h 155°C | 687 | 709 | 9,8 | 714 | 18,0 |
| 2 | 15h155°C | 677 | 702 | 9,5 | 697 | 20,8 |
| | 25h 155°C | 700 | 720 | 8,7 | 728 | 18,7 |

Exemple 4.

Dans cet exemple, on a fait varier les conditions de traction contrôlée pour une tôle en alliage 2 d'épaisseur 25 mm mise en solution pendant 5 h à 516 °C puis trempée avec de l'eau à 20 °C. Les tôles ont subi une traction contrôlée avec un allongement permanent de 1%, 2,1%, 3,5% ou 4,5 %. Différentes durées de revenu à 155 °C ont été réalisées pour rechercher le compromis optimal entre limite d'élasticité en compression et ténacité pour chaque taux d'allongement permanent.

Les résultats obtenus sont présentés dans le Tableau 5. Les éprouvettes utilisées pour la mesure de ténacité avaient une largeur W = 40 mm et une épaisseur B = 20 mm.

Tableau 5. Propriétés mécaniques sens L à mi-épaisseur pour différentes conditions traction contrôlée et de revenu

| Allongement permanent lors de la traction contrôlée | Durée de revenu à (155°C) | Limite d'élasticité en traction $R_{p0,2}$ (MPa) | Limite d'élasticité en compression $R_{c0,2}$ (MPa) | K1c L-T (MPa√m) |
|---|---|---|---|---|
| 1 | 45 | | 653* | 25,3 |
| 2,1 | 35 | 640 | 653 | 23,9 |
| 3,5 | 25 | 644 | 652 | 23,4 |
| 4,5 | 25 | 644 | 649 | 23,1 |
| * valeur obtenue par interpolation linéaire entre une mesure de 645 MPa pour un revenu de 35 h à 155 °C et 657 MPa pour un revenu de 50h à 155°C | | | | |

Avec un allongement permanent lors de la traction contrôlée de 1%, on obtient un compromis particulièrement avantageux entre la limite d'élasticité en compression et la ténacité, pour une durée de revenu 45h à 155 °C qui n'est cependant pas favorable pour la productivité du procédé.

Exemple 5.

Dans cet exemple, on a évalué les propriétés en fatigue sur éprouvettes à trou pour les alliages 2, 4 et 5 de l'exemple 1. Des tôles d'épaisseur 25 mm ont été laminées, mises en solution et tractionnées comme décrit dans l'exemple 1. La tôle en alliage 2 a subi un revenu de 25 heures à 155 °C, les tôles en alliage 4 et 5 ont subi un revenu de 22 heures à 155 °C.

Les propriétés en fatigue sur éprouvettes à trou ont été mesurées à l'air ambiant pour des niveaux de contrainte variables, à une fréquence de 50 Hz, un rapport de contrainte R = 0,1, sur des éprouvettes telles que représentées sur la Figure 2, $K_t$ = 2,3, prélevées au centre et à mi-épaisseur des tôles dans la direction L-T.

Les courbes de Wöhler correspondantes sont présentées sur la Figure 3. On a calculé l'indice de qualité de fatigue IQF dont les résultats sont donnés dans le Tableau 6.

Tableau 6 - Résultats des essais en fatigue

| Alliage | Résultats de fatigue à trou IQF (MPa), 50% rupture pour 100 000 cycles (L-T) |
|---|---|
| 2 | 218 |
| 4 | 196 |
| 5 | 195 |

Le produit selon l'invention en alliage 2 présente un IQF significativement amélioré par rapport aux produits de référence en alliages 4 et 5

## Revendications

1. Procédé de fabrication d'un produit filé, laminé et/ou forgé à base d'alliage d'aluminium dans lequel :

   a) on élabore un bain de métal liquide comprenant

   4,2 à 5,2 % en poids de Cu,
   0,9 à 1,2 % en poids de Li,
   0,1 à 0,3 % en poids de Ag,
   0,1 à 0,25 % en poids de Mg,
   0,08 à 0,18 % en poids de Zr,
   0,01 à 0,15 % en poids de Ti,
   optionnellement jusque 0,2 % en poids de Zn,
   optionnellement jusque 0,6 % en poids de Mn,

   une teneur de Fe et de Si inférieure ou égale à 0,1 % en poids chacun, et des autres éléments à une teneur inférieure ou égale à 0,05% en poids chacun et 0,15% en poids au total, reste aluminium,
   b) on coule une forme brute à partir dudit bain de métal liquide ;
   c) on homogénéise ladite forme brute par un traitement thermique dans lequel la température à mi-épaisseur de la forme brute atteint au minimum de 510 °C pendant une durée d'au moins 10 heures,
   d) on déforme à chaud et optionnellement à froid ladite forme brute ainsi homogénéisée en un produit filé, laminé et/ou forgé ;
   e) on met en solution à une température d'au moins 515 °C et on trempe ledit produit ;
   f) on tractionne de façon contrôlée ledit produit avec une déformation permanente de 0,5 à 5 %;
   g) on réalise un revenu dudit produit par chauffage à une température de 140 à 170 °C pendant 5 à 70 heures.

2. Procédé selon la revendication 1 dans lequel la teneur en cuivre dudit bain de métal liquide est comprise entre 4,3 et 5,0% en poids et de préférence entre 4,4 et 4,8 % en poids.

3. Procédé selon une quelconque des revendications 1 à 2 dans lequel la teneur en lithium dudit bain de métal liquide est comprise entre 1,0 et 1,15% en poids et de préférence entre 1,03 et 1,10 % en poids.

4. Procédé selon une quelconque des revendications 1 à 3 dans lequel la teneur en magnésium dudit bain de métal liquide est comprise entre 0,15 et 0,24% en poids.

5. Procédé selon une quelconque des revendications 1 à 4 dans lequel la teneur en manganèse dudit bain de métal liquide est comprise entre 0,2 et 0,5% en poids et de préférence entre 0,3 et 0,45 % en poids.

6. Procédé selon une quelconque des revendications 1 à 5 dans lequel la teneur en argent dudit bain de métal liquide est comprise entre 0,15 et 0,25% en poids.

7. Procédé selon une quelconque des revendications 1 à 6 dans lequel la teneur en zirconium dudit bain de métal liquide est comprise entre 0,11 et 0,18 % en poids et de préférence entre 0,13 et 0,17% en poids.

8. Procédé selon une quelconque des revendications 1 à 7 dans lequel la température de mise en solution est au minimum de 520 °C et de préférence au minimum de 522 °C.

9. Procédé selon une quelconque des revendications 1 à 8 dans lequel le détensionnement par traction contrôlée est réalisé avec une déformation permanente inférieure à 2 % et avantageusement de 0,5 à 1,5 %.

10. Produit filé, laminé et/ou forgé en alliage d'aluminium susceptible d'être obtenu par le procédé selon une quelconque des revendications 1 à 9, présentant une épaisseur d'au moins 12 mm, une limite d'élasticité en compression dans la direction longitudinale d'au moins 645 MPa et un allongement dans la direction longitudinale d'au moins 7%.

**11.** Produit filé selon la revendication 10 **caractérisé en ce que** sa limite d'élasticité en compression dans le sens L est au moins 680 MPa, sa limite d'élasticité en traction dans le sens L est au moins 680 MPa et sa ténacité $K_Q$(T-L), est au moins $17\ \mathrm{MPa}\sqrt{\mathrm{m}}$.

**12.** Produit filé selon la revendication 11 dont la teneur en manganèse est comprise entre 0,2 et 0,5 % en poids **caractérisé en ce que** sa limite d'élasticité en compression dans le sens L est au moins 720 MPa, sa limite d'élasticité en traction dans le sens L est au moins 710 MPa et sa ténacité $K_Q$(T-L) est au moins $18\ \mathrm{MPa}\sqrt{\mathrm{m}}$.

**13.** Produit laminé selon la revendication 10 dont l'épaisseur est d'au moins 20 mm **caractérisé en ce que** sa limite d'élasticité en compression dans le sens L est au moins 650 MPa et sa ténacité $K_Q$(L-T), est au moins $18\ \mathrm{MPa}\sqrt{\mathrm{m}}$.

**14.** Produit laminé selon la revendication 13 dont la teneur en manganèse est comprise entre 0,2 et 0,5 % en poids **caractérisé en ce que** sa limite d'élasticité en compression dans le sens L est au moins 653 MPa et préférentiellement d'au moins 655 MPa et sa ténacité $K_Q$(L-T), d'au moins $20\ \mathrm{MPa}\sqrt{\mathrm{m}}$ et préférentiellement d'au moins $24\ \mathrm{MPa}\sqrt{\mathrm{m}}$.

**15.** Elément de structure extrados incorporant au moins un produit selon une quelconque des revendications 10 à 14 ou fabriqué à partir d'un tel produit.

**Patentansprüche**

**1.** Verfahren zur Herstellung eines Strangpress-, Walz- und/oder Schmiedeerzeugnisses auf Basis von Aluminiumlegierung, bei dem:

a) ein Flüssigmetallbad hergestellt wird, aufweisend

4,2 bis 5,2 % Gew.-% Cu,
0,9 bis 1,2 % Gew.-% Li,
0,1 bis 0,3 % Gew.-% Ag,
0,1 bis 0,25 % Gew.-% Mg,
0,08 bis 0,18 % Gew.-% Zr,
0,01 bis 0,15 % Gew.-% Ti,
wahlweise bis zu 0,2 % Gew.-% Zn,
wahlweise bis zu 0,6 % Gew.-% Mn,

einen Gehalt an Fe und Si von jeweils 0,1 Gew.-% oder weniger und weitere Elemente mit einem Gehalt von jeweils höchstens 0,05 Gew.-% und insgesamt höchstens 0,15 Gew.-%, Rest Aluminium,
b) aus dem Flüssigmetallbad eine Rohform hergestellt wird,
c) die Rohform durch eine Wärmebehandlung homogenisiert wird, bei der die Temperatur auf halber Dicke der Rohform mindestens 510 °C während einer Dauer von mindestens 10 Stunden erreicht,
d) die so homogenisierte Rohform zu einem Strangpress-, Walz- und/oder Schmiedeerzeugnis warm- und wahlweise kaltgewalzt wird,
e) das Erzeugnis bei einer Temperatur von mindestens 515 °C lösungsgeglüht wird und abgeschreckt wird,
f) das Erzeugnis mit einer bleibenden Verformung von 0,5 bis 5 % kontrolliert gereckt wird,
g) das Erzeugnis durch Erwärmen auf eine Temperatur von 140 bis 170 °C für 5 bis 70 Stunden warmausgelagert wird.

**2.** Verfahren nach Anspruch 1, bei dem der Kupfergehalt des Flüssigmetallbads im Bereich zwischen 4,3 und 5,0 Gew.-% und vorzugsweise zwischen 4,4 und 4,8 Gew.-% liegt.

**3.** Verfahren nach irgendeinem der Ansprüche 1 bis 2, bei dem der Lithiumgehalt des Flüssigmetallbads im Bereich zwischen 1,0 und 1,15 Gew.-% und vorzugsweise zwischen 1,03 und 1,10 Gew.-% liegt.

4. Verfahren nach irgendeinem der Ansprüche 1 bis 3, bei dem der Magnesiumgehalt des Flüssigmetallbads im Bereich zwischen 0,15 und 0,24 Gew.-% liegt.

5. Verfahren nach irgendeinem der Ansprüche 1 bis 4, bei dem der Mangangehalt des Flüssigmetallbads im Bereich zwischen 0,2 und 0,5 Gew.-% und vorzugsweise zwischen 0,3 und 0,45 Gew.-% liegt.

6. Verfahren nach irgendeinem der Ansprüche 1 bis 5, bei dem der Silbergehalt des Flüssigmetallbads im Bereich zwischen 0,15 und 0,25 Gew.-% liegt.

7. Verfahren nach irgendeinem der Ansprüche 1 bis 6, bei dem der Zirkoniumgehalt des Flüssigmetallbads im Bereich zwischen 0,11 und 0,18 Gew.-% und vorzugsweise zwischen 0,13 und 0,17 Gew.-% liegt.

8. Verfahren nach irgendeinem der Ansprüche 1 bis 7, bei dem die Lösungsglühtemperatur mindestens 520 °C und vorzugsweise mindestens 522 °C beträgt.

9. Verfahren nach irgendeinem der Ansprüche 1 bis 8, bei dem das Spannungsarmrecken durch kontrolliertes Recken mit einer bleibenden Verformung von weniger als 2 % und vorteilhaft von 0,5 bis 1,5 % erfolgt.

10. Strangpress-, Walz- und/oder Schmiedeerzeugnis herstellbar durch das Verfahren nach irgendeinem der Ansprüche 1 bis 9, welches eine Dicke von mindestens 12 mm, eine Elastizitätsgrenze bei Druckbeanspruchung in Längsrichtung von mindestens 645 MPa und eine Dehnung in Längsrichtung von mindestens 7 % aufweist.

11. Strangpresserzeugnis nach Anspruch 10, **dadurch gekennzeichnet, dass** seine Elastizitätsgrenze bei Druckbeanspruchung in Längsrichtung mindestens 680 MPa, seine Elastizitätsgrenze bei Zugbeanspruchung in Längsrichtung mindestens 680 MPa und seine Zähigkeit $K_Q$(T-L) mindestens $17\ MPa\sqrt{m}$ beträgt.

12. Strangpresserzeugnis nach Anspruch 11 mit einem Mangangehalt im Bereich zwischen 0,2 und 0,5 Gew.-%, **dadurch gekennzeichnet, dass** seine Elastizitätsgrenze bei Druckbeanspruchung in Längsrichtung mindestens 720 MPa, seine Elastizitätsgrenze bei Zugbeanspruchung in Längsrichtung mindestens 710 MPa und seine Zähigkeit $K_Q$(T-L) mindestens $18\ MPa\sqrt{m}$ beträgt.

13. Walzerzeugnis nach Anspruch 10 mit einer Dicke von mindestens 20 mm, **dadurch gekennzeichnet, dass** seine Elastizitätsgrenze bei Druckbeanspruchung in Längsrichtung mindestens 650 MPa und seine Zähigkeit $K_Q$(L-T) mindestens $18\ MPa\sqrt{m}$ beträgt.

14. Walzerzeugnis nach Anspruch 13 mit einem Mangangehalt im Bereich zwischen 0,2 und 0,5 Gew.-%, **dadurch gekennzeichnet, dass** seine Elastizitätsgrenze bei Druckbeanspruchung in Längsrichtung mindestens 653 MPa und vorzugsweise mindestens 655 und seine Zähigkeit $K_Q$(L-T) mindestens $20\ MPa\sqrt{m}$ und vorzugsweise mindestens $24\ MPa\sqrt{m}$ beträgt.

15. Flügeloberseitenstrukturelement, welches mindestens ein Erzeugnis nach irgendeinem der Ansprüche 10 bis 14 umfasst oder aus einem solchen Erzeugnis hergestellt ist.


**Claims**

1. Method of manufacturing an extruded, rolled and/or forged product based on an aluminium alloy in which:

   a) a liquid metal bath is produced containing:

   4.2 to 5.2% by weight of Cu,
   0.9 to 1.2% by weight of Li,
   0.1 to 0.3% by weight of Ag,
   0.1 to 0.25% by weight of Mg,

0.08 to 0.18% by weight of Zr,
0.01 to 0.15% by weight of Ti,

optionally up to 0.2% by weight of Zn,
optionally up to 0.6% by weight of Mn,
a content of Fe and Si less than or equal to 0.1% by weight of each and other elements with a content of less than 0.05% each by weight, and 0.15% by weight in total, the remainder being aluminium,
b) an raw form is cast from said liquid metal bath;
c) said raw form is homogenised by a heat treatment in which the temperature at mid-thickness of the raw form reaches at least 510°C for a duration of at least 10 hours,
d) said raw form thus homogenised is hot worked and optionally cold worked into an extruded, rolled and/or forged product;
e) said product is solution heat treated at a temperature of at least 515°C and is quenched;
f) said product is stretched with a permanent set of 0.5 to 5%
g) said product is aged by heating to a temperature of 140 to 170°C for 5 to 70 hours.

2. Method according to claim 1, in which the copper content of said liquid metal bath is between 4.3 and 5.0% by weight and preferably between 4.4 and 4.8% by weight.

3. Method according to either of claims 1 and 2, in which the lithium content of said liquid metal bath is between 1.0 and 1.15% by weight and preferably between 1.03 and 1.10% by weight.

4. Method according to any one of claims 1 to 3, in which the magnesium content of said liquid metal bath is between 0.15 and 0.24% by weight.

5. Method according to any one of claims 1 to 4, in which the manganese content of said liquid metal bath is between 0.2 and 0.5% by weight and preferably between 0.3 and 0.45% by weight.

6. Method according to any one of claims 1 to 5, in which the silver content of said liquid metal bath is between 0.15 and 0.25% by weight.

7. Method according to any one of claims 1 to 6, in which the zirconium content of said liquid metal bath is between 0.11 and 0.18% by weight and preferably between 0.13 and 0.17% by weight.

8. Method according to any one of claims 1 to 7, in which the solution heat-treatment temperature is at least 520°C and is preferably at least 522°C.

9. Method according to any one of claims 1 to 8, in which stress relieving by controlled stretching is performed with a permanent set of less than 2% and advantageously between 0.5 and 1.5%.

10. Extruded, rolled and/or forged aluminium alloy product that can be obtained by the method according to any one of claims 1 to 9, that is at least 12 mm thick, has a compressive yield stress in the longitudinal direction equal to at least 645 MPa and an elongation in the longitudinal direction equal to at least 7%.

11. Extruded product according to claim 10, **characterised in that** its compressive yield stress in the L direction is at least 680 MPa, its tensile yield stress in the L direction is at least 680 MPa and its toughness $K_Q$ (T-L) is at least

$17 \text{ MPA}\sqrt{m}.$

12. Extruded product according to claim 11 in which the manganese content is between 0.2 and 0.5% by weight, **characterised in that** its compressive yield stress in the L direction is at least 720 MPa, its tensile yield stress in the L direction is at least 710 MPa and its toughness $K_Q$ (T-L) is at least $18 \text{ MPa}\sqrt{m}.$

13. Rolled product according to claim 10 with a thickness of at least 20 mm, **characterised in that** its compressive yield stress in the L direction is at least 650 MPa and its toughness $K_Q$(T-L) is at least $18 \text{ MPa}\sqrt{m}.$

14. Rolled product according to claim 13 in which the manganese content is between 0.2 and 0.5% by weight, **charac-**

**terised in that** its compressive yield stress in the L direction is at least 653 MPa and preferably at least 655 MPa and its toughness $K_Q$(T-L) is at least $20\ MPa\sqrt{m}$ and preferably at least $24\ MPa\sqrt{m}$.

15. Upper wing structural element incorporating at least one product according to any one of claims 10 to 14 or manufactured from such a product.

Fig. 1

Fig. 2

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5032359 A
- US 5455003 A
- US 7438772 B
- US 7229509 B
- US 2009142222 A1
- WO 2009036953 A
- WO 2012085359 A2
- US 20120225271 A1

**Littérature non-brevet citée dans la description**

- **L.S KRAMER ; C.E. CROSS ; J.R. PICKENS.** The effect of composition on the Weldability of Al-Cu-Li-Ag-Mg Alloys in the High Cu :Li Regime. *Aluminium-Lithium Conférence,* 07 Octobre 1991
- Aluminum Standards and Data. The Aluminium Association, 2-12, 2-13